# EUROPÄISCHE PATENTSCHRIFT

(11) **EP 3 163 688 B1**
(45) Veröffentlichungstag und Bekanntmachung des Hinweises auf die Patenterteilung: **15.12.2021**
(21) Anmeldenummer: 16195198.3
(22) Anmeldetag: 24.10.2016
(51) Int. Cl.: H01R 13/6467, H01R 13/6589, H01R 31/06, H04B 3/02, H01R 13/6469

(54) **ANORDNUNG MIT ZWEI ÜBER EIN VERBINDUNGSELEMENT MITEINANDER VERBUNDENEN DATENKABELN**
CONNECTING ELEMENT FOR CONNECTING A FIRST DATA CABLE WITH A SECOND DATA CABLE AND DATA LINE WITH SUCH A CONNECTION ELEMENT
ÉLÉMENT DE CONNEXION DESTINÉ À CONNECTER UN PREMIER CÂBLE DE DONNÉES À UN SECOND CÂBLE DE DONNÉES ET LIGNE DE DONNÉES COMPORTANT UN TEL ÉLÉMENT DE CONNEXION.

(30) Priorität: 28.10.2015 DE 102015221089
(43) Veröffentlichungstag der Anmeldung: 03.05.2017
(73) Patentinhaber: LEONI Kabel GmbH, 91154 Roth (DE)
(72) Erfinder: NACHTRAB, Johannes, 91575 Windsbach (DE); KÖPPENDÖRFER, Erwin, 91126 Schwabach (DE); PÖHMERER, Rainer, 90610 Winkelhaid (DE); DORNER, Dominik, 91785 Pleinfeld (DE); FEIST, Michael, 91126 Schwabach (DE)
(74) Vertreter: FDST Patentanwälte

(56) Entgegenhaltungen:
- EP-A1- 2 219 267
- EP-A1- 2 355 258
- EP-A1- 2 650 979
- WO-A1-2018/015005
- WO-A2-2012/087956
- US-A1- 2002 028 604
- US-A1- 2014 189 190
- US-A1- 2014 242 840
- US-A1- 2014 335 732
- US-A1- 2015 207 283

## Beschreibung

Die Erfindung betrifft eine Anordnung mit zwei über ein Verbindungselement miteinander verbundenen Datenkabeln.

Für hochfrequente Datenübertragungen wird häufig eine symmetrische Übertragung eines Datensignals verwendet. Hierbei wird über ein Übertragungspaar in einer ersten Ader das eigentliche Signal und in der zugeordneten zweiten Ader das hierzu invertierte Signal übertragen. Die beiden Signale werden empfängerseitig ausgewertet und miteinander summiert, wobei sich hier externe Störungen, die sich auf beide Signale auswirken, wieder aufheben.

Als Datenkabel für derartige symmetrische Datenübertragungen sind unterschiedliche Typen von Datenkabeln bekannt. Zum einen werden häufig die symmetrischen Signale über ein Aderpaar übertragen, welches mit einer Paarschirmung versehen ist. Die symmetrischen Signale werden daher in den nebeneinander liegenden Adern des Aderpaares übertragen. Diese paarweise angeordneten Adern verlaufen üblicherweise parallel zueinander. Für zwei hochfrequente, symmetrische Signale sind dabei vier Adern erforderlich. Hierzu werden üblicherweise parallel geführte Aderpaare verwendet (parallel pair).

Symmetrische Datenkabel mit Aderpaaren werden häufig zur Datenübertragung in Computernetzwerken als sogenannte Ethernet-Kabel eingesetzt. Eine Verbindung des Datenkabels z.B. mit einer Komponente erfolgt über einen Stecker und eine Anschlussbuchse. Ein verbreiteter Steckertyp ist der Typ RJ45. Ein Datenkabel mit einem derartigen Steckertyp ist beispielsweise aus der US 2015/020783 A1 zu entnehmen. Dieser weist eine Leiterplatte auf, an der die einzelnen Adern jeweils paarweise angeschlossen sind.

Ein weiteres Datenkabel mit endseitig angebrachtem Stecker ist aus der US 2002/0028604 A1 zu entnehmen. Die einzelnen Aderpaare sind dabei innerhalb des Steckers zueinander abgeschirmt insbesondere in jeweils einer eigenen Kammer für ein jeweiliges Aderpaar geführt.

Aus der US 2014 /335732 A1 ist ein Verbindungselement zur Verbindung zweier Datenkabel zu entnehmen. Das Verbindungselement weist dabei Kontaktelemente auf, die paarweise jeweils mit einem Aderpaar verbunden sind. Die Kontaktelement-Paare sind nicht kollinear zueinander geführt und kreuzen sich beispielsweise. Hierdurch werden die Abstände zwischen den Kontaktelementen innerhalb des Verbindungselements variiert, wodurch ein unerwünschtes Nebensprechverhalten verbessert werden soll.

Aus der WO 2012/087956 A2 sowie der US 2014/189190 A1 sind jeweils ein Verfahren sowie eine Vorrichtung zu entnehmen, bei denen zwei Paarleitungen zur Übertragung von Signalen nebeneinander angeordnet sind, wobei in der einen Paarleitung die Polarität umgepolt wird, um ein Nebensprechen zu verringern.

Daneben ist es auch bekannt, symmetrische Signale über einen Verseilverbund von mehreren Adern zu übertragen, wobei der Paarbezug eines jeweiligen Übertragungspaares nicht durch nebeneinander angeordnete Paare sondern durch typischerweise diagonal gegenüberliegende Paare gebildet ist. Speziell sind hierbei Viererverseilungen, wie beispielsweise der sogenannte Dieselhorst Martin Vierer oder auch der Sternvierer zu nennen.

Beim Dieselhorst Martin Vierer werden zwei Adern jeweils zu einem Paar verseilt (verdrillt) und in einem gesonderten Arbeitsgang wird aus den zwei Paaren ein Vierer-Verseilverbund gefertigt. Die notwendige Entkopplung der Signale wird beim Dieselhorst-Martin Vierer über unterschiedliche Schlaglängen realisiert.

Besonders im automobilen Umfeld sind Sternvierer als Übertragungsleitungen oft anzutreffen. Das meist genutzte System dazu wird als HSD-System (High Speed Data System) bezeichnet. Es handelt sich dabei um Sternvierer Leitungen und ein daran angepasstes Stecksystem. Alle nachfolgend gemachten Anmerkungen gelten nicht nur allgemein für Sternviererstecker und Sternviererbuchsen sondern auch für die marktüblichen HSD Stecker und Buchsen. Bei dem HSD System werden, wie bei allen Sternvierer-Kontaktierungssystemen, die symmetrischen Signale jeweils in die Diagonalen eingespeist. Durch die senkrecht zueinander stehenden Felder wird das andere Paar wenig beeinflusst. Es ist dabei aber notwendig, dass die Diagonale weder im Kabel noch im Stecker, aufgelöst wird. Die Sternvierer-Anordnung wird wegen seiner besonders platzsparenden und robusten Geometrie hier besonders gerne eingesetzt.

Im automobilen Umfeld sind derartige Vierer-Verseilverbunde aufgrund ihrer vergleichsweise kostengünstigen Fertigung und ihrer guten Flexibilität häufig anzutreffen. Das meistgenutzte System ist das HSD-System (High Speed Data System). Zu diesem System bestehen standardisierte Stecksysteme.

Ein Sonderfall dazu ist das oben bereits erwähnte Parallel-Pair. Hier werden, wie im Sternvierer, die vier Adern parallel zueinander im Kabel angeordnet. Jedoch ist der Bezug nicht in der Diagonale sondern wie bei einer Paarverseilung nebeneinander angeordnet. Um die hochfrequenten Signale zu entkoppeln werden die parallel verlaufenden Paare jeweils dabei von einer Schirmfolie oder einem Geflecht oder Wendelschirm umhüllt. Die in sich geschlossene, unterteilte, leitfähige Umhüllung sorgt für sehr gute Nahnebensprech- (Next) und Fernnebensprechwerte (Fext). Ebenfalls profitieren die Eigenschaften des Aliennext und ―Fext.

Diese unterschiedlichen Kabelsysteme lassen sich nicht miteinander kombinieren. Ein Parallel-Pair lässt sich nicht einfach an einem Sternvierer Stecker oder Buchse anschließen, da die Hochfrequenzeigenschaften durch das Aufheben der Paarbeziehungen leiden. Ein entsprechendes Steckelement für ein Parallel Pair benötigt, trotz der nahezu gleichen äußeren Dimensionen, zwei geschirmte Kammern die das Schirmkonzept des Parallel Pair zum Beispiel bis auf eine Leiterplatine im Steckerelement fortführen

Ausgehend hiervon liegt der Erfindung die Aufgabe zugrunde, eine zuverlässige symmetrische Datenübertragung zu ermöglichen, wobei für die Konzeptionierung der Datenübertragung eine hohe Flexibilität besteht.

Die Aufgabe wird gemäß der Erfindung gelöst durch eine Anordnung zur Verbindung zweier Datenleitungen mit einem Verbindungselement mit den Merkmalen des Anspruchs 1.

Das Verbindungselement dient zur Verbindung eines ersten Datenkabels mit einem zweiten zum ersten verschiedenen Datenkabel. Das erste Datenkabel ist dabei insbesondere als Parallel Pair ausgebildet. Es weist zwei Aderpaare mit jeweils zwei insbesondere parallel nebeneinander angeordneten Adern auf, die ein Übertragungspaar für eine symmetrische Datenübertragung bilden und insbesondere mit einer Paarschirmung versehen sind. Insbesondere umfasst das erste Datenkabel genau zwei Aderpaare. Das zweite Datenkabel ist demgegenüber als ein Verseilverbund, insbesondere als ein Vierer-Verseilverbund mit vier Adern ausgebildet, welcher vorzugsweise mit einem die Adern umgebenden Gesamtschirm versehen ist. Bei dem zweiten Datenkabel bilden dabei diagonal gegenüberliegende Adern jeweils ein Übertragungspaar für eine symmetrische Datenübertragung. Speziell handelt es sich bei dem zweiten Datenkabel um einen Sternvierer. Vorzugsweise umfassen die beiden Datenkabel daher jeweils exakt zwei Übertragungspaare.

Das Verbindungselement ist nach Art eines Adapterelements ausgebildet und weist mehrere Verbindungsleitungen auf, über die die nebeneinander angeordneten Adern der Übertragungspaare des ersten Datenkabels auf die diagonal gegenüberliegend angeordneten Adern der Übertragungspaare des zweiten Datenkabels geführt sind.

Durch das Verbindungselement wird daher innerhalb einer Verbindungsstrecke der Übergang zwischen zwei unterschiedlichen Datenkabel-Typen ermöglicht, sodass hierdurch insgesamt die Auslegung und Konfektionierung eines Datenübertragungssystems für symmetrische Datensignale vereinfacht und flexibler möglich ist. So können beispielsweise Komponenten, die zum Anschluss von geschirmten Aderpaaren ausgebildet sind, für die Datenübertragung ohne weiteres mit Verseilverbünden kombiniert werden, welche gerade im automotiven Bereich aufgrund ihrer hohen (Biege-)Flexibilität und ihrer im Vergleich zu den paarweise geschirmten Datenkabeln geringeren Kosten eingesetzt werden. Allgemein wird daher über das Verbindungselement ein jeweiliges Übertragungspaar des einen Datenkabels auf ein jeweiliges Übertragungspaar des anderen Datenkabels überführt. Der zunächst parallele Bezug wird daher in den diagonalen Paarbezug umgewandelt und umgekehrt.

Das nach Art eines Adapterelements ausgebildete Verbindungselement ist dabei üblicherweise lediglich einige cm, beispielsweise maximal 10cm lang.

Vorzugsweise ist das Verbindungselement als ein separates Bauteil ausgebildet. Insbesondere ist das Verbindungselement dabei als ein Stecker ausgebildet, sodass dieser in einfacher Weise sich mit zumindest einem der beiden Datenkabel-Typen über eine einfache Steckverbindung verbinden lässt. Hierzu ist an einer jeweiligen Endseite des Verbindungselements ein Steckerteil zur Ausbildung der Steckverbindung mit einem komplementären Steckerteil des jeweiligen Datenkabels ausgebildet. Die Verbindungsleitungen sind dabei zweckdienlicherweise insgesamt innerhalb eines (Stecker-) Gehäuses des Verbindungselements angeordnet. Bei diesem kann es sich sowohl um ein Kunststoffbauteil als auch um ein metallisches Bauteil handeln. Im Falle eines metallischen (oder metallisierten) oder allgemein leitenden Bauteils für das Steckergehäuse ist zugleich eine Schirmwirkung erreicht.

Gemäß einer ersten Ausgestaltung des Verbindungselements als Stecker ist dabei lediglich an einer Endseite des Adapterelements ein Steckerteil ausgebildet und an der anderen Endseite ist ein Anschluss für das jeweils andere Datenkabel ausgebildet. Im konfektionierten Zustand sind an dieser anderen Endseite die Übertragungspaare des anderen Datenkabels unmittelbar fest, also nicht lösbar angeschlossen. Dies erfolgt beispielsweise über eine Löt-, Crimp- oder sonstige Verbindung. In diesem Fall handelt es sich dann insbesondere also um ein vorkonfektioniertes Datenkabel des einen Typs, an dem endseitig das Verbindungselement als Steckerelement angeschlagen ist, sodass unmittelbar eine Steckverbindung mit einem entsprechenden vorkonfektionierten Datenkabel des anderen Typs ausgebildet werden kann.

In einer alternativen Ausführungsvariante des Verbindungselements als Stecker ist das Verbindungselement nach Art eines Adapter-Steckers ausgebildet, welcher also an seinen beiden gegenüberliegenden Endseiten Steckerteile unterschiedlichen Typs aufweist, sodass die eine Endseite für eine Steckverbindung mit dem ersten Datenkabel und das gegenüberliegende Steckerteil für eine Steckverbindung mit dem zweiten Datenkabel ausgebildet ist.

Die gegenüberliegenden Steckerteile sind dabei vorzugsweise unterschiedlich ausgebildet, weisen daher unterschiedliche Steckergesichter auf. Dies ist jedoch nicht zwingend erforderlich. Im einfachsten Fall weisen die Steckerteile insgesamt vier Steckanschlüsse für die vier Adern des jeweiligen Datenkabels auf.

Zweckdienlicherweise sind die Steckerteile dabei allgemein als einfache Steckerelemente ausgebildet, wie sie insbesondere im automobilen Bereich anzutreffen sind. Sie sind bevorzugt mit handelsüblichen Steckerelementen speziell für Parallel Pair Datenkabel sowie für Sternvierer-Datenkabel, insbesondere HSD-Stecker kompatibel.

Sie weisen hierzu üblicherweise für jeweils eine Ader eine elektrisch leitfähige Steckbuchse oder einen elektrisch leitfähigen Steckstift auf. Die Steckerteile unterscheiden sich daher von bei High-Speed-Computernetzwerken eingesetzten Steckelementen, bei denen häufig zur Steckkontaktierung eine Steckkontaktzunge vorhanden ist, welche nach Art einer Leiterplatte ausgebildet ist und mit mehreren nebeneinander angeordneten Anschlusskontakten versehen ist.

Im Hinblick auf eine zuverlässige und insbesondere störungsfreie Datenübertragung auch im Bereich des Verbindungselements ist in zweckdienlicher Ausgestaltung der Gesamtschirm mit den Paarschirmen verbunden. Die jeweilige Schirmung der beiden Datenkabel ist daher auch über das Verbindungselement hinweg durchgeführt. Die einzelnen Schirme der beiden Datenkabel liegen daher auf einem gleichen (Masse-)Potenzial.

Zweckdienlicherweise ist dabei vorgesehen, dass die Verbindungsleitungen auch nach außen geschirmt sind. Die Verbindungsleitungen werden daher innerhalb des Verbindungselements von einer Schirmung zumindest teilweise und vorzugsweise vollständig umgeben. Hierzu werden beispielsweise entweder die Paarschirme oder der Gesamtschirm im Verbindungselement weitergeführt und mit dem jeweiligen anderen Schirm des anderen Datenkabels verbunden. Alternativ oder ergänzend weist das Verbindungselement selbst eine Schirmung beispielsweise in Form eines leitfähigen Gehäuses bzw. eines leitfähigen, insbesondere hülsenförmigen Schirmelements auf.

In besonders bevorzugter Weise sind die Verbindungsleitungen jeweils einzelweise geschirmt. Durch eine derartige einzelweise Schirmung sind quasi die Paarbezüge der einzelnen Übertragungspaare aufgehoben, sodass eine jeweilige Verbindungsleitung innerhalb des Verbindungselements beliebig verlegt werden kann, ohne dass die Datenübertragungsqualität negativ beeinflusst wird.

Gemäß einer bevorzugten Ausführungsvariante sind die Verbindungsleitungen als sich kreuzende Adern ausgebildet. Dies bedeutet, dass innerhalb des Verbindungselements eine Anzahl an Adern vorliegt, die der Aderanzahl des jeweiligen Datenkabels entspricht. Insbesondere weist das Verbindungselement daher vier Adern auf. Aufgrund der Überführung des Paarbezugs bei den geschirmten Aderpaaren zu den Übertragungspaaren der Viererverseilung müssen sich zumindest zwei Adern kreuzen. Durch diese Maßnahme ist eine besonders kostengünstige und einfache Ausgestaltung erreicht, die speziell im automotiven Bereich angestrebt ist und dort eingesetzt wird.

Im Hinblick einer besonders zuverlässigen Datenübertragung ist eine jeweilige Verbindungsleitung bevorzugt als ein Koaxialleiter ausgebildet, welcher also einen Innenleiter aufweist, welcher zunächst von einer Isolierung (Dielektrikum) umgeben ist und damit eine Ader ausbildet. Das Dielektrikum ist wiederum von einem Außenleiter, auch als Außenschirm bezeichnet, konzentrisch umgeben. Bei dem Koaxialleiter handelt es daher auch um eine einzelweise geschirmte Verbindungsleitung. Der Innenleiter wird mit einer jeweiligen Ader der Datenkabel verbunden. Der Außenleiter ist in zweckdienlicher Weiterbildung dann einerseits mit einer jeweiligen Paarschirmung und andererseits mit dem Gesamtschirm verbunden.

Alternativ hierzu sind die Verbindungsleitungen gebildet durch die Adern eines der beiden Datenkabel. Die Adern sind daher innerhalb des Verbindungselements weitergeführt.

Im Sinne einer besonders einfachen und kostengünstigen Ausgestaltung bildet in bevorzugter Ausgestaltung ein Endbereich eines der beiden Datenkabel selbst die Verbindungsleitungen. Dies bedeutet, dass in diesem Endbereich des jeweiligen Datenkabels der Paarbezug quasi aufgehoben wird und zwei Adern gekreuzt werden. Dadurch wird der Paarbezug der nebeneinander liegenden Übertragungspaare auf die diagonal gegenüberliegenden Übertragungspaare übertragen oder umgekehrt. Für diesen Fall ist daher kein separates Bauteil erforderlich. Das Verbindungselement ist dabei insbesondere in einen Stecker des jeweiligen Datenkabels integriert.

Gemäß einer ersten Ausgestaltung ist dabei in einem Endbereich des Datenkabels ein Kabelmantel sowie die jeweilige Schirmung des Datenkabels entfernt und die von der Schirmung freigelegten Adern bilden die Verbindungsleitungen. Diese sind hierbei vorzugsweise nicht einzelweise geschirmt. Aufgrund der kurzen Strecke ist dies für gewisse Anwendungsbereiche tolerabel.

Alternativ hierzu wird in vorteilhafter Weise die Schirmung des jeweiligen Datenkabels im Verbindungselement weitergeführt und zur einzelweisen Schirmung der Verbindungsleitungen verwendet. Bei dieser Ausführungsvariante ist daher eine zuverlässige, sichere Datenübertragung auch im Verbindungsbereich gesichert, ohne dass zusätzliche Schirmmaßnahmen oder zusätzliche Bauteile erforderlich wären.

Zweckdienlicherweise sind hierzu beim ersten Datenkabel die Paarschirmungen aufgetrennt, und zwar in einer Trennebene zwischen den beiden Adern, sodass der jeweiligen (einzelnen) Ader ein insbesondere U-förmiger Teilschirm zugeordnet ist. Dieser weist daher zu einer Seite einen offenen Bereich auf.

Bevorzugt ist dabei zumindest ein Teil der Adern mit ihrem Teilschirm verdreht, und zwar im Bereich von 30° bis 110°, bevorzugt im Bereich von 60°-90°. Durch diese Maßnahme kann der Teilschirm an eine geeignete Position gedreht werden, sodass eine effiziente Schirmung erreicht ist.

Bevorzugt sind die Adern derart verdreht, dass die offenen Bereiche der Teilschirme nach außen gerichtet sind. Durch diese Maßnahme wird daher innerhalb des Verbindungselements mit den aufgeschnittenen Paarschirmen eine gute Gesamtschirmung erreicht.

Gemäß einer weiteren Ausführungsvariante für die Ausgestaltung der Verbindungsleitungen sind diese als Leiterbahnen einer Platine ausgebildet. Insbesondere kreuzen sich dabei zwei Leiterbahnen. Bevorzugt ist hierzu zumindest ein Teil der Leiterbahnen auf unterschiedlichen Ebenen der Platine geführt, wobei durch Vias einzelne Leiterbahnen von einer Ebene in die andere Ebene geführt werden.

Allgemein handelt es sich daher bei dieser Platine um eine mehrlagige Platine. Die Verbindung der einzelnen Übertragungspaare und das Kreuzen erfolgt dabei mit an sich bekannten Maßnahmen aus der Leiterplattentechnologie.

Zweckdienlicherweise weist dabei die Platine beispielsweise an ihren gegenüberliegenden Endseiten Anschlusskontakte auf, an denen die einzelnen Adern der jeweiligen Datenkabel anschließbar oder angeschlossen sind. Hierbei besteht die Möglichkeit, die Adern eines oder beider Datenkabel unmittelbar an den Anschlusskontakten beispielsweise durch Löten anzuschließen. Alternativ besteht auch die Möglichkeit des Anschlusses zumindest eines Datenkabels oder auch beider Datenkabel über eine Steckverbindung.

Die Platine weist dabei weiterhin zumindest einen Masseanschluss für die Paarschirmung sowie einen Masseanschluss für die Gesamtschirmung auf. Die beiden Masseanschlüsse sind dabei miteinander verbunden, sodass die einzelnen Schirmungen der Datenkabel miteinander elektrisch leitend verbunden sind und auf einem gemeinsamen Potenzial liegen. Allgemein weist daher die Platine vorzugsweise eine Masseverbindung auf.

Bevorzugt weist die Platine zumindest eine und vorzugsweise zwei gegenüberliegende Masseebenen auf. Hierbei handelt es sich insbesondere um eine vollflächige leitfähige Schicht. Bei zwei gegenüberliegenden Masseebenen sind die Verbindungsleitungen zweckdienlicherweise zwischen den beiden Masseebenen geführt. An einer der Masseebenen sind vorzugsweise die Schirme der Datenleitungen angeschlossen.

Allgemein führt das Überkreuzen der Verbindungsleitungen zu unterschiedlichen Weglängen für ein jeweiliges Übertragungspaar. In bevorzugter Ausgestaltung ist nunmehr innerhalb des Verbindungselements eine Kompensationsstrecke ausgebildet, sodass die Weglängen der Adern für ein jeweiliges Übertragungspaar einander angepasst und insbesondere identisch sind. Dies bedeutet, dass die durch die Kreuzung der einen Ader eines Übertragungspaares bewirkte längere Wegstrecke auch bei der Verbindungsleitung für die andere Ader des Übertragungspaares verlängert ist.

In zweckdienlicher Ausgestaltung ist hierzu das Verbindungselement insgesamt abgewinkelt ausgebildet und bevorzugt als gewinkeltes Steckerelement. Die unterschiedlichen Verbindungsleitungen sind dabei zweckdienlicherweise derart geführt, dass durch die abgewinkelte Ausgestaltung die Kompensationsstrecke ausgebildet ist. Insbesondere ist hierbei vorgesehen, dass die jeweilige kreuzende Verbindungsleitung (z.B. Ader mit der dadurch verlängerten Wegstrecke) innen und die normal durchgeführte, nicht kreuzende Ader eines jeweiligen Übertragungspaares außen im abgewinkelten Bereich geführt wird. Hierdurch ist also eine automatische Weglängenanpassung erreicht.

Das hier beschriebene Verbindungselement sowie die beschriebene Datenleitung mit einem solchen Verbindungselements dienen bevorzugt zur Verwendung in einem Verkehrsmittel zu Land, Wasser und/oder Luft, wie z.B. Kraftfahrzeug, Flugzeug, Schiffen und Booten, Luftkissenbooten etc.. Speziell werden das Verbindungselement sowie die Datenleitung in einem Kraftfahrzeug eingesetzt.

Ausführungsbeispiele der Erfindung werden nachfolgend anhand der Figuren näher erläutert. Diese zeigen teilweise in stark vereinfachten Darstellungen:
- FIG. 1: eine Datenleitung mit zwei Datenkabeln unterschiedlichen Typs, welche über ein Verbindungselement miteinander verbindbar sind,
- FIG. 2: eine vereinfachte Darstellung des Verbindungsschemas im Verbindungselement zur Verbindung der Adern eines Parallel Pairs mit den Adern eines Viererverseilverbunds,
- FIG. 3: eine Seitendarstellung einer Ausführungsvariante, bei dem das Verbindungselement integraler Bestandteil eines Steckers des ersten Datenkabels ist,
- FIG. 4: eine zur Figur 3 vergleichbare Darstellung, bei der das Verbindungselement integraler Bestandteil eines Steckers des zweiten Datenkabels ist,
- FIG. 5A, FIG. 5B: zwei Aufsichtdarstellungen zur Illustration eines Verbindungselements, bei dem als Verbindungsleitungen die Adern des Parallel Pairs verwendet sind, wobei hierbei zur Aufhebung der Paarbezüge die Paarschirme aufgetrennt und gedreht sind,
- FIG. 6A: eine vereinfachte Aufsicht auf eine Leiterplatte, auf der die Verbindungsleitungen ausgebildet sind,
- FIG. 6B: eine Seitendarstellung der mehrlagigen Leiterplatte gemäß Figur 6A sowie
- FIG. 7: eine Seitenansicht der beiden Datenkabel mit einem gewinkelten Steckverbinder.

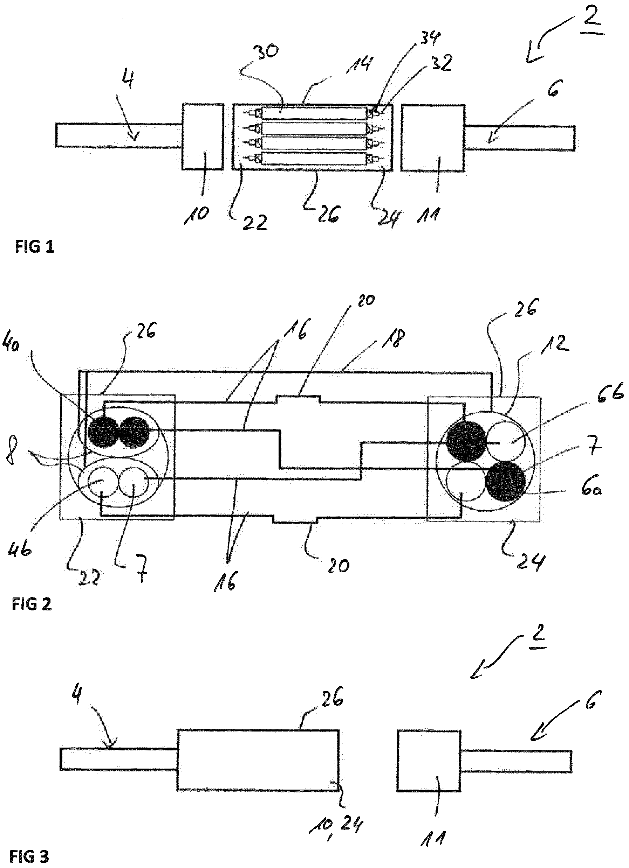

In den Figuren sind gleichwirkende Teile mit den gleichen Bezugszeichen versehen. In Figur 1 ist allgemein eine Datenleitung 2 mit einem ersten Datenkabel 4 sowie einem zweiten Datenkabel 6 dargestellt. Das erste Datenkabel 4 ist dabei als ein sogenanntes Parallel Pair mit (genau) zwei Aderpaaren 4a, 4b ausgebildet (vgl. auch Fig. 2). Jedes Aderpaar 4a, 4b ist dabei von einer jeweiligen Paarschirmung 8 umgeben. Diese ist weiterhin üblicherweise noch von einem Kabelmantel umgeben. Endseitig ist an diesem ersten Datenkabel 4 ein erster Stecker 10 angeordnet. Dieser weist typischerweise ein insbesondere metallisches Gehäuse, auf.

Bei dem zweiten Datenkabel 6 handelt es sich um einen Vierer Verseilverbund (Stern Vierer) mit ebenfalls zwei Aderpaaren 6a, 6b. Die einzelnen Adern 7 eines jeweiligen Aderpaares 6a, 6b sind hier diagonal zueinander angeordnet. Die insgesamt vier Adern 7 sind von einem Gesamtschirm 12 umgeben. Im Ausführungsbeispiel der Figur 1 weist das zweite Datenkabel 6 endseitig einen zweiten Stecker 11 auf, welcher ebenfalls beispielsweise ein metallisches Gehäuse aufweist.

Die Anordnung der einzelnen Adern 7 der beiden Datenkabel 4, 6 ergibt sich insbesondere aus der schematisierten Darstellung der Figur 2.

Die Datenkabel 4, 6 dienen allgemein zur Übertragung von hochfrequenten Datensignalen für High-Speed-Datenübertragungen von zwei symmetrischen Datensignalen. Zur Verbindung der beiden Datenkabel 4, 6 ist gemäß Figur 1 weiterhin ein Verbindungselement 14 ausgebildet. Über dieses Verbindungselement werden die jeweiligen Aderpaare 4a, 4b; 6a, 6b mit ihren jeweiligen Paarbezügen der beiden Datenkabel 4, 6 aufeinander überführt. Das Verbindungsschema hierzu ist anhand der Figur 2 zu entnehmen.

Das Verbindungselement 14 weist allgemein Verbindungsleitungen 16 auf, über die die einzelnen Adern 7 der beiden Datenkabel 4, 6 miteinander verbunden sind. Aufgrund der unterschiedlichen Paarbezüge ist hierbei erforderlich, dass zumindest zwei der Verbindungsleitungen 16 sich kreuzen (vgl. hierzu die beiden mittleren Verbindungsleitungen 16). Ergänzend ist weiterhin noch eine Masseverbindung 18 ausgebildet, welche die Paarschirme 8 mit dem Gesamtschirm 12 elektrisch verbindet.

Ergänzend ist in der Figur 2 in den beiden sich nicht kreuzenden Verbindungsleitungen noch eine Kompensationsstrecke 20 angedeutet. Aufgrund der sich kreuzenden Verbindungsleitungen 16 weisen diese eine verlängerte Wegstrecke auf. Um diese zu kompensieren, sind die beiden sich nicht kreuzenden Verbindungsleitungen 16 um die Kompensationsstrecke 20 erweitert.

In der Figur 2 ist auf der linken Bildhälfte die Anordnung der Adern 7 des ersten Datenkabels 4 und auf der rechten Seite die des zweiten Datenkabels 6 dargestellt. Die linke Bildhälfte kann dabei auch als ein Steckergesicht eines ersten Steckerteils 22 und die rechte Bildhälfte als ein zweites Steckerteil 24 des Verbindungselements 14 an dessen gegenüberliegenden Endseiten angesehen werden.

Die Steckerteile 22, 24 weisen dabei jeweils oder gemeinsam ein Steckergehäuse 26 auf, welches vorzugsweise aus leitendem Material, speziell Metall ist. Alternativ kann es auch aus nicht leitendem Material bestehen. In diesem Fall ist es beispielsweise metallisiert. Hierdurch wird insgesamt eine Abschirmung im Steckerbereich nach außen erreicht. Die beiden Steckerteile 22, 24 sind kompatibel mit den zuvor erwähnten Steckern 10, 11 des ersten bzw. des zweiten Datenkabels 4, 6.

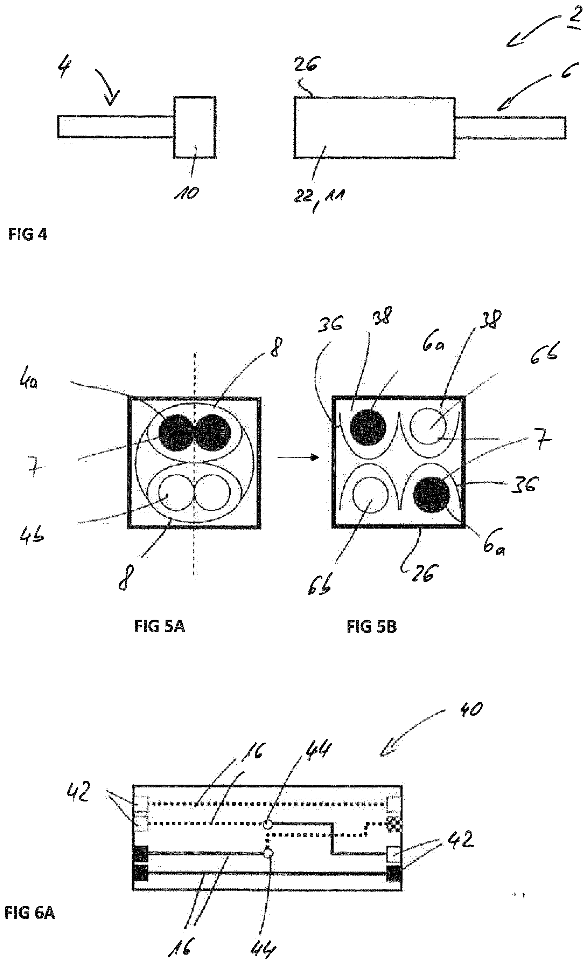

In der Figur 1 ist das Verbindungselement 14 als ein separates Bauteil mit jeweils den beiden Steckerteilen 22, 24 dargestellt. Alternativ besteht auch die Möglichkeit, dass das Verbindungselement 14 in den jeweiligen Stecker 10 eines der beiden Datenkabel 4, 6 integriert ist, wie dies schematisiert in Figuren 3, 4 dargestellt ist. In diesem Fall sind daher die Adern 7 innerhalb des kombinierten Steckerteils 10, 24; 11, 22 von dem einen Paarbezug zu dem anderen Paarbezug überführt. Handelt es sich um ein kombiniertes zweites Steckerteil 10, 24, wie dies in Figur 3 dargestellt ist, so ist an diesem das erste Datenkabel 4 angeschlossen und die Adern 7 des Parallel Pairs werden beispielsweise auf das in der rechten Bildhälfte dargestellte Steckergesicht überführt.

Bei der Ausführungsvariante der Figur 4 ist es umgekehrt. Dort wird innerhalb des kombinierten ersten Steckerteils11, 22 das angeschlossene zweite Datenkabel 6 mit der Vierer Verseilung beispielsweise auf das in der linken Bildhälfte der Figur 2 dargestellte Steckergesicht überführt.

Allgemein weist das Verbindungselement 14 ein Gehäuse auf, welches beispielsweise das durch das zuvor erwähnte, gemeinsame Steckergehäuse 26 gebildet ist.

Die Verbindungsleitungen 16 können in unterschiedlicher Weise ausgebildet werden.

Im Hinblick auf eine zuverlässige und möglichst störungsfreie Übertragung wird dabei grundsätzlich angestrebt, dass die Paarbezüge der einzelnen Aderpaare 4a, 4b sowie 6a, 6b aufgehoben werden und quasi wieder neu ausgebildet werden.

Hierzu ist insbesondere vorgesehen, dass die Verbindungsleitungen 16 innerhalb des Verbindungselements 14 möglichst abgeschirmt zueinander verlaufen oder allgemein zuverlässig ein Potentialbezug der jeweiligen Verbindungsleitung 16 zu einem Massepotential ausgebildet wird. Die Schirme (Paarschirmung 8, Gesamtschirm 12) sind dabei üblicherweise mit Massepotential verbunden.

Gemäß einer ersten Ausführungsvariante werden die Verbindungsleitungen 16 als Koaxialleitungen 30 ausgebildet, die einen Innenleiter 32 sowie einen Außenleiter 34 aufweisen. Die Koaxialleitungen 30 sind beispielhaft in Figur 1 angedeutet. Der Außenleiter 34 ist dabei typischerweise von einer Schirmlage, insbesondere Schirmgeflecht gebildet, welche ein Dieletrikum (Kunststoff) mit darin geführtem Innenleiter 32 umgibt. Ergänzend weist dabei jede Koaxialleitung 30 typischerweise noch einen äußeren Isolationsmantel auf.

Der jeweilige Innenleiter 32 wird dabei jeweils mit einer Ader 7 elektrisch kontaktiert. Der jeweilige Außenleiter 34 dient zur Verbindung des jeweiligen Paarschirms 8 mit dem Gesamtschirm 12. Durch die Verwendung der Koaxialleitung 30 ist also jede einzelne Verbindungsleitung 16 einzelweise geschirmt. Dadurch sind die Paarbeziehungen aufgehoben und Störungen werden vermieden.

Bei dieser Ausführungsvariante mit den Koaxialleitungen 30 ist nicht zwingend ein separates Gehäuse 26 erforderlich. Die Koaxialleitungen 30 können auch in einfacher Weise zusammengefasst und beispielsweise endseitig an dem ersten sowie zweiten Steckerteil 22, 24 für eine jeweilige Steckverbindung mit dem ersten Datenkabel 4 bzw. zweiten Datenkabel 6 angeschlossen sein.

Anstelle der Verwendung von Koaxialleitungen 30 werden einfache Adern, also von einer Aderisolation umgebene Leiter verwendet. Hier sind die Adern vorzugsweise in dem Gehäuse 26 angeordnet. Alternativ sind lediglich das erste sowie zweite Steckerteil 22, 24 endseitig an den Adern angeschlagen.

In einer alternativen Ausgestaltung, insbesondere im Zusammenhang beispielsweise mit den Varianten gemäß den Figuren 3 und 4, speziell im Zusammenhang mit der Figur 3, sind die Adern 7 eines jeweiligen Datenkabels 4, 6 im Verbindungselement 14 weitergeführt und bilden damit die Verbindungsleitungen 16. Hierzu werden die Adern 7 jeweils von dem üblicherweise vorhandenen Kabelmantel sowie auch der Schirmung (Paarschirmung 8 bzw. Gesamtschirm 12 freigelegt. Insbesondere wird also der Kabelmantel abisoliert und die Schirme im Bereich des Verbindungselements 14 entfernt. Dies ist insbesondere bei geringeren Anforderungen an die Übertragungsqualität ermöglicht, da die Adern 7 lediglich auf eine vergleichsweise kurzen Übertragungsstrecke ungeschirmt sind.

In bevorzugter Ausgestaltung werden hierbei die Schirmung des jeweiligen Datenkabels 4, 6 für eine Schirmung innerhalb des Verbindungselements 14 weitergeführt. Dies wird nachfolgend insbesondere im Zusammenhang mit den Figuren 5A, 5B näher erläutert:
Ausgehend vom ersten Datenkabel 4 werden die einzelnen Aderpaare 4a, 4b getrennt. Und zwar wird hierzu ein jeweiliger Paarschirm 8 mittig durchtrennt, sodass sich zwei Teilschirme 36 je Aderpaar 4, 4a ergeben. Diese sind jeweils im Querschnitt betrachtet in etwa U-förmig ausgebildet. Die Teilschirme 36 bzw. die jeweilige Ader 7 mit ihrem Teilschirm 36 bevorzugt wird dann bevorzugt um 90° gedreht, sodass ein offener Bereich 38 des jeweiligen Teilschirms 36 nach außen orientiert ist. Zu einer jeweiligen benachbarten Ader 7 liegt daher zumindest ein Teilstück eines oder mehrerer Teilschirme 36 vor. Die einzelnen Adern 7 sind daher wechselweise zueinander geschirmt.

Auch hier weist das Verbindungselement 14 zweckdienlicherweise ein Gehäuse 26 auf, welches nach außen eine Schirmung ausbildet. Die offenen Bereiche 38 sind zum Gehäuse 26 hin orientiert, sodass also der offene Bereich 38 durch das Gehäuse 26 geschirmt wird.

Die derart präparierten und vorbereiteten Adern 7 mit den Teilschirmen 36 sind von der in Figur 5A dargestellten Aderverteilung in die in Figur 5B dargestellte Aderverteilung innerhalb des Verbindungselements 14 überführt.

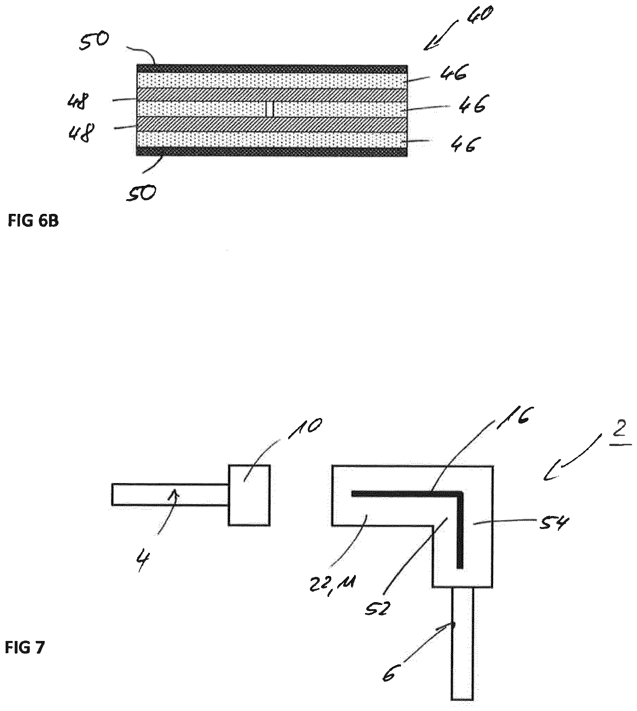

Gemäß einer weiteren Ausführungsvariante sind die Verbindungsleitungen 16 als Leiterbahnen einer Platine 40 ausgebildet. Eine solche ist in den Figuren 6A, 6B dargestellt. Die Platine ist in der Figur 6A in einer Aufsicht und in Figur 6B in einer Seitenansicht dargestellt. Bei der Platine 40 handelt es sich um eine mehrlagige Platine, wobei die Verbindungsleitungen 16 in unterschiedlichen Lagen oder Ebenen geführt sind. Die Verbindungsleitungen 16 der einen Lage sind als durchgezogene Linien und die der anderen Lage als gepunktete Linien dargestellt.

Die Platine 40 weist weiterhin an ihren gegenüberliegenden Seiten üblicherweise Anschlusskontakte 42 auf, die typischerweise ebenfalls in unterschiedlichen Lagen angeordnet sind. Im Ausführungsbeispiel der Figur 6a, ist die linke Seite der Platine 40 zum Anschluss des ersten Datenkabels 4 bzw. zum Anschluss zweier paargeschirmter Aderpaare 4a, 4b vorgesehen. Das erste Aderpaar 4a ist dabei in der einen Ebene der Platine 40 und das andere Aderpaar 4b in der darunterliegenden Lage der Platine 40 angeordnet. Die beiden mittleren Verbindungsleitungen 16 werden zur Überführung des Paarbezugs auf die Sternvierer-Anordnung jeweils gekreuzt und in die jeweilige andere Ebene überführt. Hierzu sind sogenannte Vias 44 also Durchkontaktierungen durch eine Isolationslage 46 vorgesehen. Die Kontaktierung der Datenleitungen 4 an der Platine 40 erfolgt beispielsweise in an sich bekannter Weise. Hierzu können zum einen die Leiter der Adern 7 unmittelbar an den Anschlusskontakten 42 elektrisch kontaktiert werden, beispielsweise durch Löten. Alternativ hierzu sind die Anschlusskontakte 42 in geeigneter Weise mit einem jeweiligen Steckerteil 22, 24 verbunden oder Teil desselben. Das bedeutet, dass die Platine 40 wahlweise in dem separaten Verbindungselement 14, wie es in Figur 1 dargestellt ist oder auch in einem kombinierten Steckerteil 10, 24 bzw. 11, 22 integriert ist, wie es in den Figuren 3, 4 dargestellt ist.

Den mehrlagigen Aufbau der Platine 40 zeigt die Figur 6B. Wie zu erkennen ist, ist eine mittlere Isolationslage 46 zwischen zwei Lagen 48 mit den Verbindungsleitungen 16 angeordnet. Auf diese folgt jeweils wiederum eine Isolationslage 46. Anschließend sind noch zwei Masseebenen 50 ausgebildet, sodass also die Verbindungsleitungen 16 zwischen den beiden Masseebenen 50 eingeschlossen sind. Durch diese Maßnahme wird ebenfalls der jeweilige Paarbezug zwischen den Paaren 4a, 4b; 6a, 6b aufgehoben. Jede einzelne Verbindungsleitung 16 ist auf das Massepotential bezogen. An diesen Masseebenen 50 ist vorzugsweise mittelbar oder unmittelbar die jeweilige Paarschirmung 8 bzw. der Gesamtschirm 12 angeschlossen.

Die Figur 7 zeigt schließlich noch eine Ausführungsvariante, bei der das Verbindungselement 14 gewinkelt ausgebildet ist. Stark vereinfacht und schematisiert ist hierbei auch noch der geknickte Verlauf der Verbindungsleitungen 16 dargestellt. Aufgrund des geknickten Verlaufs ist eine Innenseite 52 sowie eine Außenseite 54 ausgebildet. An der Innenseite sind nunmehr vorzugsweise die beiden sich kreuzenden Verbindungsleitungen 16 und an der Außenseite 54 die nicht gekreuzten Verbindungsleitungen 16 verlegt. Hierdurch erfolgt eine automatische Kompensation der unterschiedlichen Wegstrecken.

## Patentansprüche

1. Anordnung umfassend ein Verbindungselement (14) sowie ein erstes Datenkabel und ein hiervon verschiedenes zweites Datenkabel (4), wobei das erste Datenkabel (6) mit dem zweiten Datenkabel über das Verbindungselement miteinander verbunden sind, wobei
- das erste Datenkabel (4) zwei Aderpaare (4a, 4b) mit jeweils zwei nebeneinander angeordnete Adern (7) aufweist, die ein Übertragungspaar für eine symmetrische Datenübertragung bilden und wahlweise mit oder ohne Paarschirmung versehen sind, wobei die nebeneinander angeordneten Adern einen parallelen Paarbezug definieren,
- das zweite Datenkabel (6) einen Viererverseilverbund mit vier Adern (7) aufweist, der wahlweise mit oder ohne einem Gesamtschirm (12) versehen ist und bei dem diagonal gegenüberliegende Adern (7) ein Übertragungspaar für eine symmetrische Datenübertragung bilden und die jeweils diagonal gegenüberliegenden Adern einen diagonalen Paarbezug definieren,
- das Verbindungselement als ein Adapterelement ausgebildet ist und mehrere Verbindungsleitungen (16) aufweist, von denen zumindest zwei sich kreuzen, derart, dass der parallelen Paarbezug in den diagonalen Paarbezug überführt wird, so dass bei der Verbindung des ersten Datenkabels (4) mit dem zweiten Datenkabel (6) die nebeneinander angeordneten Adern (7) eines jeweiligen Übertragungspaares des ersten Datenkabels auf die diagonal gegenüberliegend angeordneten Adern des jeweiligen Übertragungspaares des zweiten Datenkabels geführt sind.

2. Anordnung nach dem vorhergehenden Anspruch, die eine erste Endseite sowie eine dieser gegenüberliegende zweite Endseite aufweist wobei
- an einer der Endseiten ein erstes Steckerteil (22) für eine Steckverbindung mit einem der beiden Datenkabel ausgebildet ist,
- die andere Endseite für eine direkte Verbindung mit dem anderen Datenkabel ausgebildet ist oder ein zweites Steckerteil (24) für eine Steckverbindung mit dem anderen Datenkabels aufweist.

3. Anordnung nach einem der vorhergehenden Ansprüche, die eine Masseverbindung (18) zur elektrischen Verbindung der Paarschirme (8) des ersten Datenkabels (4) mit dem Gesamtschirm (12) des zweiten Datenkabels (6) aufweist.

4. Anordnung nach einem der vorhergehenden Ansprüche, die ein Gehäuse aus einem leitfähigen Material aufweist, so dass es nach außen geschirmt ist.

5. Anordnung nach einem der vorhergehenden Ansprüche, wobei die Verbindungsleitungen (16) zueinander abgeschirmt sind.

6. Anordnung nach einem der vorhergehenden Ansprüche, wobei die Verbindungsleitungen (16) als Koaxialleiter (30) mit jeweils einem Innenleiter und einem Außenleiter ausgebildet sind und ein jeweiliger Außenleiter einerseits mit zumindest einer Paarschirmung und andererseits mit dem Gesamtschirm verbunden ist.

7. Anordnung nach einem der Ansprüche 1 bis 5, wobei die Adern (7) des einen Datenkabels zumindest teilweise die Verbindungsleitungen ausbilden.

8. Anordnung nach dem vorhergehenden Anspruch, wobei die Schirmung des Datenkabels zur Schirmung der Verbindungsleitungen verwendet ist.

9. Anordnung nach dem vorhergehenden Anspruch, bei dem es sich bei dem Datenkabel um das erste Datenkabel (4) handelt und die beiden Paarschirme (8) mittig zwischen den beiden Adern des Aderpaares getrennt sind, sodass jeder Ader ein Teilschirm (36) zugeordnet ist, der nicht vollständig um die jeweilige Ader (7) verläuft und einen offenen Bereich aufweist.

10. Anordnung nach dem vorhergehenden Anspruch, wobei zumindest ein Teil (7) der Adern mit ihrem jeweiligen Teilschirm derart verdreht ist, dass die offenen Bereiche nach außen gerichtet sind.

11. Anordnung nach einem der Ansprüche 1 bis 5, die eine Platine (40) mit Leiterbahnen aufweist und die Leiterbahnen die Verbindungsleitungen (16) bilden.

12. Anordnung nach dem vorhergehenden Anspruch, wobei die Platine (40) zwei gegenüberliegende Masseebenen (50) aufweist, über die eine Schirmung erfolgt, wobei die Verbindungsleitungen (16) zwischen den Masseebenen geführt sind.

13. Anordnung nach einem der vorhergehenden Ansprüche, wobei sich zumindest zwei der Verbindungsleitungen (16) kreuzen und hierdurch unterschiedliche Weglängen für ein jeweiliges Übertragungspaar entstehen und wobei weiterhin eine Kompensationsstrecke ausgebildet ist, sodass die Weglängen der Verbindungsleitungen für ein jeweiliges Übertragungspaar einander angepasst und insbesondere identisch sind.

14. Anordnung nach dem vorhergehenden Anspruch, wobei das Verbindungselement (14) abgewinkelt, bevorzugt als gewinkelter Stecker ausgebildet ist, und dass durch die abgewinkelte Ausgestaltung die Kompensationsstrecke ausgebildet ist, indem die sich kreuzenden Verbindungsleitungen an einer Innenseite des abgewinkelten Verbindungselement geführt sind.

## Claims

1. Arrangement comprising a connecting element (14) and a first data cable and a second data cable (4) different therefrom, wherein the first data cable (6) is connected to the second data cable via the connecting element, wherein
- the first data cable (4) has two pairs of cores (4a, 4b), with respectively two adjacently arranged cores (7), which form a transmission pair for symmetrical data transmission and are optionally provided with or without pair shielding (8), wherein the adjacently arranged cores (7) define a parallel pair reference,
- the second data cable (6) has a quad-stranded composite with four cores (7), which is optionally provided with or without an overall shielding (12) and in which diagonally opposite disposed cores (7) form a transmission pair for symmetrical data transmission and the respectively diagonally opposite cores define a diagonal pair reference,
- the connecting element is designed as an adapter element and has a plurality of connecting lines (16), at least two of which cross each other in such a way that the parallel pair reference is converted into the diagonal pair reference, so that, when the first data cable (4) is connected to the second data cable (6), the adjacently arranged cores (7) of a respective transmission pair of the first data cable are guided onto the diagonally opposite cores of the respective transmission pair of the second data cable.

2. Arrangement according to the preceding claim, which has a first end side and a second end side oppositely disposed to said first end side, wherein
- a first plug part (22) is formed on one of the end sides for a plug connection to one of the two data cables,
- the other end side is formed for a direct connection to the other data cable or has a second plug part (24) for a plug connection to the other data cable.

3. Arrangement according to one of the preceding claims, having a ground connection (18) for electrically connecting the pair shieldings (8) of the first data cable (4) to the overall shielding (12) of the second data cable (6).

4. Arrangement according to one of the preceding claims, having a housing made of a conductive material so as to be shielded from the outside.

5. Arrangement according to one of the preceding claims, wherein the connecting lines (16) are shielded with respect to each other.

6. Arrangement according to one of the preceding claims, wherein the connecting lines (16) are designed as coaxial conductors (30) with respectively an inner conductor and an outer conductor, and a respective outer conductor is connected to at least one pair shielding on the one hand and to the overall shielding on the other hand.

7. Arrangement according to one of claims 1 to 5, wherein the cores (7) of the one data cable at least partially form the connecting lines.

8. Arrangement according to the preceding claim, wherein the shielding of the data cable is used to shielding the connecting lines.

9. Arrangement according to the preceding claim, wherein the data cable is the first data cable (4) and the two pair shieldings (8) are divided centrally between the two cores of the pair of cores, so that each core is associated with a partial shielding (36), which does not extend completely around the respective core (7) and has an open region.

10. Arrangement according to the preceding claim, wherein at least a part of the cores (7) is twisted with their respective partial shielding (36) in such a way that the open regions are directed outwards.

11. Arrangement according to one of claims 1 to 5, having a circuit board (40) with conductive tracks and wherein the conductive tracks form the interconnecting lines (16).

12. Arrangement according to the preceding claim, wherein the circuit board (40) has two opposing ground planes (50) via which shielding is provided, wherein the connecting lines (16) are guided between the ground planes.

13. Arrangement according to one of the preceding claims, wherein at least two of the connecting lines (16) cross each other, thereby resulting in different path lengths for a respective transmission pair, and wherein furthermore a compensation path is formed, so that the path lengths of the connecting lines for a respective transmission pair are adapted to each other and are, in particular, identical.

14. Arrangement according to the preceding claim, wherein the connecting element (14) is angled, preferably in the form of an angled plug, and that the compensation path is formed by the angled configuration in that the intersecting connecting lines are guided on an inner side of the angled connecting element.

## Revendications

1. Ensemble comprenant un élément de connexion (14) et un premier câble de données et un deuxième câble de données (4) différent de celui-ci, dans lequel le premier câble de données (6) est connecté au deuxième câble de données via l'élément de connexion, dans lequel
- le premier câble de données (4) comporte deux paires d'âmes (4a, 4b), avec respectivement deux âmes (7) disposées côte à côte, qui forment une paire de transmission pour la transmission symétrique de données et sont facultativement munis d'un blindage de paire (8) ou non, dans lequel les âmes disposées côte à côte définissent une référence de paire parallèle,
- le deuxième câble de données (6) comprend un composite à quatre fils avec quatre âmes (7), qui est facultativement muni d'un blindage global (12) ou non et dans lequel des âmes (7) diagonalement opposés forment une paire de transmission pour la transmission symétrique de données et les âmes diagonalement opposées respectives définissent une référence de paire diagonale,
- l'élément de connexion est conçu comme un élément adaptateur et comprend une pluralité de lignes de connexion (16), dont au moins deux se croisent, de telle sorte que la référence de paire parallèle est convertie en référence de paire diagonale, de sorte que, lors de la connexion du premier câble de données (4) au deuxième câble de données (6), les âmes (7) disposés les uns à côté des autres d'une paire de transmission respective du premier câble de données sont guidés sur les âmes diagonalement opposées de la paire de transmission respective du deuxième câble de données.

2. Ensemble selon la revendication précédente, comprenant un premier côté d'extrémité et un deuxième côté d'extrémité disposé de manière opposée à celui-ci, dans lequel
- un premier connecteur (22) est formée sur l'un des côtés d'extrémité pour une connexion par fiche à l'un des deux câbles de données,
- l'autre côté d'extrémité est formé pour une connexion directe à l'autre câble de données ou comprend un deuxième connecteur (24) pour une connexion par fiche à l'autre câble de données.

3. Ensemble selon l'une des revendications précédentes, comprenant une connexion de masse (18) pour connecter électriquement les paires de blindages (8) du premier câble de données (4) au blindage global (12) du deuxième câble de données (6).

4. Ensemble selon l'une des revendications précédentes, comprenant un boîtier en matériau conducteur de manière à être blindé de l'extérieur.

5. Ensemble selon l'une des revendications précédentes, dans lequel les lignes de connexion (16) sont blindées les unes par rapport aux autres.

6. Ensemble selon l'une des revendications précédentes, dans lequel les lignes de connexion (16) sont conçues comme des conducteurs coaxiaux (30) avec respectivement un conducteur intérieur et un conducteur extérieur, et un conducteur extérieur respectif est connecté d'une part à au moins un blindage de paire et d'autre part au blindage global.

7. Ensemble selon l'une des revendications 1 à 5, dans lequel les âmes (7) de l'un câble de données forment au moins partiellement les lignes de connexion.

8. Ensemble selon la revendication précédente, dans lequel le blindage du câble de données est utilisé pour blinder les lignes de connexion.

9. Ensemble selon la revendication précédente, dans lequel le câble de données est le premier câble de données (4) et les deux paires de blindages (8) sont divisées centralement entre les deux âmes de la paire d'âmes, de sorte qu'à chaque âme un blindage partiel (36) est associé, qui n'entoure pas complètement l'âme respectif (7) et comprend une zone ouverte.

10. Ensemble selon la revendication précédente, dans lequel au moins une partie des âmes (7) avec leur blindage partiel respectif est tordue de telle manière que les zones ouvertes sont dirigées vers l'extérieur.

11. Ensemble selon l'une des revendications 1 à 5, comprenant une carte de circuit imprimé (40) avec des pistes conductrices et les pistes conductrices formant les lignes de connexion (16).

12. Ensemble selon la revendication précédente, dans lequel la carte de circuit imprimé (40) a deux plans de masse opposés (50) par l'intermédiaire desquels le blindage est effectué, dans lequel les lignes de connexion (16) sont guidées entre les plans de masse.

13. Ensemble selon l'une des revendications précédentes, dans lequel au moins deux des lignes de connexion (16) se croisent, ce qui produit des longueurs de trajet différentes pour une paire de transmission respective, et dans lequel en outre un trajet de compensation est formé de sorte que les longueurs de trajet des lignes de connexion pour une paire de transmission respective sont adaptées les unes aux autres et, en particulier, sont identiques.

14. Ensemble selon la revendication précédente, dans lequel l'élément de connexion (14) est coudé, de préférence sous la forme d'une fiche coudée, et que le trajet de compensation est formé par la configuration coudée en ce que les lignes de connexion intersectées sont guidées sur un côté intérieur de l'élément de connexion coudé.
